# EUROPÄISCHE PATENTANMELDUNG

(11) **EP 2 963 357 A1**
(43) Veröffentlichungstag der Anmeldung: **06.01.2016**
(21) Anmeldenummer: 15172691.6
(22) Anmeldetag: 18.06.2015
(51) Int. Cl.: F24J 2/54

(54) **NACHFÜHRVORRICHTUNG FÜR SOLARMODULE**

(30) Priorität: 30.06.2014 DE 102014212569
(71) Anmelder: IDEEMATEC Deutschland GmbH, 94574 Wallerfing (DE)
(72) Erfinder: Kufner, Johann, 94527 Aholming (DE)
(74) Vertreter: Müller Schupfner & Partner Patent- und Rechtsanwaltspartnerschaft mbB

(57) **Zusammenfassung**

Nachführvorrichtung (10) für Solarmodule, umfassend einen Pfosten (12) zur mittelbaren und/oder unmittelbaren Anordnung einer Trageinheit (20), welche über ein Drehgelenk (23) um eine Rotationsachse (R) rotierbar ist, wobei die Trageinheit (20) zwei bezogen auf das Drehgelenk (23) gegenüberliegende Krafteinleitungsbereiche (26) zum Rotieren der Trageinheit (20) umfasst, wobei eine Krafteinleitung mittels eines zumindest im Wesentlichen kreissegmentförmigen Führungselements (40) erfolgt, und wobei ein Radius (R40) des kreissegmentförmigen Führungselements (40) einem Abstand des jeweiligen Krafteinleitungsbereichs (26) zum Drehgelenk (23) entspricht.

## Beschreibung

Die vorliegende Erfindung betrifft eine Nachführvorrichtung für Solarmodule, eine Querreihe von Nachführvorrichtungen, eine Längsreihe von Nachführvorrichtungen sowie ein Solarmodul-Feld.

Nachführvorrichtungen für Solarmodule der in Rede stehenden Art sind aus dem Stand der Technik grundsätzlich bekannt. Sie dienen dazu, Solarmodule oder Solarmodultische derart zu verschwenken oder zu rotieren, dass deren Neigung optimal an die Sonneneinstrahlung angepasst werden kann, um letztlich die Effizienz derartiger Systeme zu optimieren. Zum Verschwenken der Solarmodule bzw. Solarmodultische sind aus dem Stand der Technik beispielsweise Schubstangen oder Zugelemente wie Seile bekannt. Die bekannten Lösungen weisen aber oftmals verschiedenste konstruktive Mängel auf. So beinhalten Nachführvorrichtungen mit Schubstangen in der Regel viele Lagerstellen und weisen eine gerade beim Verschwenken ungünstige Kinematik auf, was diese Systeme teuer und fehleranfällig macht. Werden Seile zum Verschwenken der Solarmodule bzw. Solarmodultische eingesetzt, besteht die Herausforderung darin, deren Spannungen in einem optimalen Bereich zu halten. Abhängig von der zugrunde liegenden Konstruktion kommt es dabei oft insbesondere zu einem Nachlassen der Seilspannungen, was derartige Nachführvorrichtungen zumeist äußerst instabil macht.

Es ist also Aufgabe der vorliegenden Erfindung, eine Nachführvorrichtung für Solarmodule, eine Querreihe von Nachführvorrichtungen, eine Längsreihe von Nachführvorrichtungen sowie ein Solarmodulfeld anzugeben, welche die vorgenannten Nachteile beseitigen und dabei äußerst einfach und kostengünstig ausgebildet sind.

Diese Aufgabe wird durch eine Nachführvorrichtung für Solarmodule gemäß Anspruch 1, durch eine Querreihe von Nachführvorrichtungen gemäß Anspruch 10, durch eine Längsreihe von Nachführvorrichtungen gemäß Anspruch 12 sowie durch ein Solarmodulfeld gemäß Anspruch 13 gelöst. Weitere Vorteile und Merkmale der Erfindung ergeben sich aus den Unteransprüchen sowie der Beschreibung und den beigefügten Figuren.

Erfindungsgemäß umfasst eine Nachführvorrichtung für Solarmodule einen Pfosten zur mittelbaren und/oder unmittelbaren Anordnung einer Trageinheit, welche über ein Drehgelenk um eine Rotationsachse rotierbar ist, wobei die Trageinheit zwei bezogen auf das Drehgelenk gegenüberliegende Krafteinleitungsbereiche zum Rotieren der Trageinheit umfasst, wobei eine Krafteinleitung mittels eines zumindest im Wesentlichen kreissegmentförmigen Führungselements erfolgt, und wobei ein Radius des kreissegmentförmigen Führungselements einem Abstand des jeweiligen Krafteinleitungsbereichs zum Drehgelenk entspricht.

Wie eingangs erläutert, dient die Nachführvorrichtung in erster Linie dazu, die Neigung eines oder mehrerer Solarmodule bzw. Photovoltaikmodule an den Sonnenstand anzupassen. Ein Solar- oder Photovoltaikmodul wandelt das Licht der Sonnenstrahlen in elektrische Energie um, wobei der Wirkungsgrad optimiert werden kann, wenn die Sonnenstrahlen in einem idealen Winkel auf die Solar- oder Photovoltaikmodule treffen. Zweckmäßigerweise kann die Nachführvorrichtung auch für andere nach diesem Prinzip arbeitende Systeme, welche unter dem Begriff "Solarthermie" zusammengefasst werden können, eingesetzt werden, mit anderen Worten also z. B. allgemein zum Verschwenken von Sonnenkollektoren oder Sonnenspiegeln (z. B. Parabolspiegel) jeder Art.

Das eigentliche Verschwenken bzw. Rotieren erfolgt zweckmäßigerweise über ein oder mehrere Zugelemente, wie beispielsweise (Draht-) Seile. Es können aber auch andere Materialien zum Einsatz kommen bzw. auch andere Zugelemente, wie Ketten oder dergleichen.

Zweckmäßigerweise erfolgt die Krafteinleitung mittels des im Wesentlichen kreissegmentförmigen Führungselements. Ein (gedachter) Mittelpunkt des kreissegmentförmigen Führungselements liegt im Wesentlichen auf dem Drehpunkt. Hintergrund dieser Anordnung ist, dass der oder die Krafteinleitungsbereiche beim Verschwenken der Trageinheit letztlich ebenfalls einen Kreisbogen bzw. ein Kreissegment beschreiben, was ohne die Verwendung der Führungselemente zum Nachlassen einer Spannung der Zugelemente, mit anderen Worten also der Seilspannung, führen kann. Wird ein Zugelement ausgehend von einem Fixpunkt, welcher z. B. auf oder an dem Pfosten angeordnet ist, mit einem der Krafteinleitungsbereiche direkt, also ohne das Führungselement, verbunden, ändert sich beim Verschwenken der Trageinheit beispielsweise um 10° aus der Horizontalen entgegen dem Uhrzeigesinn der Abstand zwischen dem vorgenannten Fixpunkt und dem Krafteinleitungsbereich um einen gewissen Betrag. Wird die Trageinheit um 10° aus der Horizontalen im Uhrzeigersinn verschwenkt, ändert sich der Abstand zwischen dem Fixpunkt und dem Krafteinleitungsbereich ebenfalls um einen gewissen Betrag. Dieser entspricht aber in seiner Länge nicht dem vorgenannten Betrag beim Verschwenken entgegen dem Uhrzeigersinn. Dieser Umstand führt grundsätzlich zu der Herausforderung bzw. zu dem Problem, dass die Seilspannung in derartigen Systemen unzulässig nachlassen kann. Insbesondere ist es z. B. nicht möglich, zwei benachbarte Trageinheiten über ein Zugelement so zu verbinden, dass ein Verschwenken der einen Trageinheit über das Zugelement auf die andere Trageinheit übertragen werden kann, ohne dass die Spannung im Zugelement unzulässig nachgibt. Auch die beiden Krafteinleitungsbereiche einer Nachführvorrichtung können nicht über z. B. ein Rolle, welche am Pfosten befestigt ist, verbunden werden, ohne dass es zu dem vorgenannten Längenproblem und damit zu einer nachlassenden Seilspannung kommt.

Zweckmäßigerweise ist aber das im Wesentlichen kreissegmentförmige Führungselement vorgesehen, wodurch das vorgenannte Problem vermieden werden kann. Der Abstand zwischen dem vorgenannten Fixpunkt und dem entsprechenden Krafteinleitungsbereich wird durch das Führungselement immer konstant gehalten, dadurch, dass er dem Führungselement folgt bzw. durch dieses vorgegeben wird. Bevorzugt sind das Führungselement und die Trageinheit derart zueinander angeordnet und ausgebildet, dass die Krafteinleitung im Wesentlichen senkrecht zur Trageinheit erfolgt. Letztendlich wirkt die Kraft, welche die Rotation bzw. das Verschwenken der Trageinheit bewirkt, tangential zum Führungselement. Zweckmäßigerweise erfolgt die Krafteinleitung direkt an der Trageinheit. Die Kraft, welche bewirkt, dass die Trageinheit verschwenkt wird, greift also immer im Bereich der Trageinheit an und wird durch das Führungselement geführt. Zweckmäßigerweise ist das Führungselement ausgelegt, die Kraft, insbesondere die Zugkraft, welche die Rotationsbewegung der Trageinheit bewirkt, umzulenken In einer bevorzugten Ausführungsform verlaufen das oder die Zugelemente im Wesentlichen senkrecht oder quer zu den Pfosten und werden dann durch die Zugelemente an die Krafteinleitungsbereich geführt und dabei entsprechend umgelenkt. Der Radius des Führungselements, welcher dem Abstand des jeweiligen Krafteinleitungsbereichs zum Drehgelenk entspricht, kann auch als Hebel interpretiert werden, mit welchem die Kraft zum Rotieren oder Verschwenken der Trageinheit auf diese wirkt. Der Hebel wirkt dabei im Wesentlichen quer zu einer Hochachse des Pfostens. Dadurch, dass das Führungselement im Wesentlichen kreissegmentförmig ausgebildet ist, bleibt der Hebel, auch wenn die Trageinheit maximal verschwenkt ist, immer gleich groß. Aus dem Stand der Technik bekannte Lösungen, welche mit starren Schubstangen arbeiten, die mittels gerader Träger die Trageinheiten verschwenken, weisen den Nachteil auf, dass diese beim Verschwenken in einer gekippten Stellung der Trageinheit ggf. nur noch einen sehr kleinen Hebel aufweisen. Dies erhöht die zum Verschwenken erforderlichen Kräfte sowie die Haltekräfte und bringt eine extreme Instabilität in das System. All diese Nachteile werden aber durch das kreissegmentförmige Führungselement, welches immer einen gleichbleibenden Hebel für die Krafteinleitung zur Verfügung stellt, verhindert.

Bevorzugt ist das Führungselement an der Trageinheit befestigt, wobei im oder am Krafteinleitungsbereich ein Zugelement befestigt ist. Das Führungselement kann an der Trageinheit stoffschlüssig befestigt, also beispielsweise verschweißt, sein. Ebenfalls bevorzugt ist auch eine form- und/oder kraftschlüssige Verbindung mit Schrauben, Bolzen, Stiften oder Nieten etc. Bei dem Zugelement handelt es sich in einer Ausführungsform um ein Seil, insbesondere um ein Drahtseil. Das Zugelement kann sowohl am Führungselement als auch an der Trageinheit befestigt sein. Entscheidend ist, dass es im oder am Krafteinleitungsbereich befestigt ist. Als Krafteinleitungsbereich wird der Bereich verstanden, in welchem die Krafteinleitung erfolgt. Dies ist in der Regel der Bereich, in welchem das Führungselement an der Trageinheit und insbesondere an dem zuvor genannten Querträger befestigt ist. In bevorzugten Ausführungsformen erfolgt die Anordnung und Befestigung des Zugelements im oder am Krafteinleitungsbereich über eine Art Spanneinheit oder dergleichen. Eine derartige Spanneinheit, welche z. B. aus ein oder mehreren Federn bestehen kann, soll Spannungsspitzen in dem Zugelement ausgleichen und gegebenenfalls auch dazu dienen, eine gewisse Grundspannung des oder der Zugelemente aufrechtzuerhalten. Es muss allerdings nicht jedes Zugelement mit einer derartigen Spanneinheit versehen sein, sondern die Anordnung des Zugelements kann auch mehr oder weniger fest erfolgen, beispielsweise indem ein Gewinde auf ein Ende des Zugelements aufgepresst ist, so dass ein Verschrauben des Zugelements zur Befestigung möglich ist.

In einer bevorzugten Ausführungsform umfasst die Trageinheit einen Querträger, welcher im Wesentlichen mittig an dem Drehgelenk befestigt ist, wobei die Ausrichtung derart erfolgt, dass er sich im Wesentlichen senkrecht oder quer zur Rotationsachse erstreckt. Bevorzugt sind an beiden Enden des Querträgers Längsträger angeordnet bzw. befestigt, welche sich entlang bzw. parallel zur Rotationsachse erstrecken. Die Befestigung bzw. Anordnung kann dabei form- und/oder kraftund/oder stoffschlüssig erfolgen. Zweckmäßigerweise ist der Querträger aus einem geschlossenen Profil, insbesondere einem geschlossenen Metallprofil, wie beispielsweise ein Vierkantprofil, geformt, wobei der Querschnitt sowohl quadratisch als auch rechteckig sein kann. Ähnliches gilt für die Längsträger, welche in einer Ausführungsform ebenfalls aus einem geschlossenen Profil, insbesondere einem Metallprofil mit beispielsweise einem quadratischen oder rechteckigen Querschnitt, geformt sind. Bei dem Metall handelt es sich bevorzugt um Stahl oder Aluminium. Alternativ kann es sich bei den vorgenannten Profilquerschnitten auch um offene Profile handeln, wie beispielsweise Doppel-T-Träger, U-Profile oder Sigma-Profile.

Das Drehgelenk muss nicht direkt am Pfosten befestigt sein, sondern kann auch an einem Kopfstück befestigt sein, welches wiederum mit dem Pfosten verbunden ist. Ein derartiges Kopfstück erlaubt eine individuelle Höhenanpassung des Drehgelenks und damit der Trageinheit, ohne dass der Pfosten, welcher fest im Boden fundamentiert ist, bewegt oder dessen Lage verändert werden muss. Das Drehgelenk selbst wird in einer Ausführungsform durch ein handelsübliches und entsprechend dimensioniertes Lager gebildet. Zweckmäßigerweise kommen auch Lager zum Einsatz, welche um eine Hochachse des Pfostens und/oder entlang der Rotationsachse eine gewisse Beweglichkeit bzw. Flexibilität erlauben. Damit können Lage- und Positionstoleranzen von entlang einer Längsachse ausgerichteten Nachführvorrichtungen bzw. Pfosten ausgeglichen werden. Dies ist besonders dann von Vorteil, wenn diese über eine gemeinsame Trageinheit oder einen gemeinsamen Solarmodultische verbunden sind.

Auf der Trageinheit können ein oder mehrere Solarmodule angeordnet werden, wobei eine Anordnung von mehreren Solarmodulen auf der Trageinheit auch Solarmodultisch genannt wird. Die Anordnung der Solarmodule auf der Trageinheit kann dabei direkt oder unmittelbar erfolgen, beispielsweise über Schrauben, Nieten, Bolzen, Stifte oder dergleichen. Sie kann aber auch indirekt oder mittelbar über Modulträgerschienen etc. erfolgen, welche zwischen den Solarmodulen und der Trageinheit angeordnet sind.

In einer bevorzugten Ausführungsform ist das kreissegmentförmige Führungselement im Wesentlichen halbkreisförmig. Zweckmäßigerweise ist das halbkreisförmige Führungselement mit seinen beiden Enden an der Trageinheit bzw. an dem vorgenannten Querträger form- und/oder kraft- und/oder stoffschlüssig an den beiden gegenüberliegenden Krafteinleitungsbereichen befestigt. Hierbei muss allerdings bemerkt werden, dass sowohl bei dem kreissegmentförmigen Führungselement als auch bei dem halbkreisförmigen Führungselement stets gilt, dass hier kein ideales Kreissegment oder kein idealer Halbkreis im mathematischen Sinn gemeint sein kann. Stets müssen bei derartigen Systemen Fertigungstoleranzen berücksichtigt werden. Für die bereits beschriebene Funktion des Führungselements ist es zudem nicht wichtig, dass es sich um ein ideales Kreissegment oder um einen idealen Halbkreis handelt. Letztendlich könnten sowohl das Kreissegment als auch der Halbkreis aus einer Vielzahl von geraden Abschnitten bzw. Stücken zusammengesetzt sein, so dass in der Gesamtansicht wieder ein Kreissegment oder ein Halbkreis entsteht bzw. angenähert wird. Ebenso kann das Führungselement auch aus einer Vielzahl von Rollen gebildet sein, welche im Wesentlichen in einer Halbkreisform oder in einer Kreissegmentform angeordnet sind. Der Krafteinleitungsbereich bzw. die Krafteinleitungsbereiche, welche sich an der Trageinheit befinden, beschreiben beim Verschwenken oder Rotieren der Trageinheit um das Drehgelenk einen Kreisbogen. Das Führungselement hat die Aufgabe, die Kraft, also beispielsweise das Zugelement, derart zu führen, dass die Kraft ebenfalls immer entlang dieses Kreisbogens wirkt. Um die Funktion sicherzustellen, ist es allerdings nicht erforderlich, dass das Führungselement eine exakte Kreissegmentform aufweist. Bevorzugt wird eine ideale Kreisbogen- oder Kreissegmentform aber möglicht gut angenähert.

In einer Ausführungsform ist das Führungselement ausgelegt, ein oder mehrere Zugelemente in einer zumindest im Wesentlichen senkrecht zu der Rotationsachse stehenden Ebene zu führen. Da die Trageinheit bezogen auf das Drehgelenk zwei gegenüberliegende Krafteinleitungsbereiche zum Rotieren der Trageinheit umfasst, beispielsweise zum Rotieren der Trageinheit im Uhrzeigersinn und zum Rotieren der Trageinheit gegen den Uhrzeigersinn, ist das Führungselement bevorzugt ausgelegt, ein oder mehrere Zugelemente in der zumindest im Wesentlichen senkrecht zu der Rotationsachse stehenden Ebene zu führen.

Bevorzugt ist das Führungselement aus einem Profil, insbesondere einem Metallprofil, gebogen, wobei das Profil bevorzugt ein U-Profil ist. Zweckmäßigerweise bildet ein derartiges U-Profil einen Kanal, in welchem ein oder mehrere Zugelemente geführt werden können. Das Führungselement kann auch mehrere derartige Kanäle, beispielsweise zwei, umfassen, so dass für jedes Zugelement ein Kanal zur Führung bereitgestellt ist.

Zweckmäßigerweise ist das Drehgelenk in einem Abstand zu einem Untergrund angeordnet, wobei ein Verhältnis des Radius des Führungselements zu dem Abstand bevorzugt in einem Bereich von etwa 0,8 bis 0,98 liegt. Dies bedeutet, dass die Zugelemente, also insbesondere die Drahtseile, welche zum Verschwenken und Rotieren der Trageinheiten benötigt werden, derart nahe am Boden verlaufen, dass ein Überfahren möglich ist. Solarmodulfelder, welche eine Vielzahl von Nachführvorrichtungen für Solarmodule umfassen, können so leicht begangen und auch befahren werden, was Wartung, Support und Pflege derartiger Anlagen extrem vereinfacht. Dadurch, dass das Führungselement das oder die Zugelemente führt, bleiben die Zugelemente auch beim Verschwenken bzw. Rotieren der Trageinheiten immer nahe am Boden. Werden die Zugelement beim Überfahren z. B. durch ein Fahrzeug leicht nach unten gedrückt, kann dies zweckmäßigerweise über die vorher erwähnte Spanneinheit bzw. ganz allgemein über eine mehr oder weniger flexible oder elastische Befestigung der Zugelemente an den Krafteinleitungsbereich kompensiert werden.

In einer Ausführungsform umfasst die Nachführvorrichtung eine Rolleneinheit, welche ausgelegt ist, ein Zugelement auf- und abzuwickeln und/oder umzulenken. Zweckmäßigerweise ist die Rolleneinheit am Pfosten angeordnet und befestigt. Sie kann aber auch neben dem Pfosten, also getrennt von diesem, angeordnet oder befestigt sein.

Zweckmäßigerweise ist ein Verhältnis eines Radius der Rolleneinheit zum Radius des Führungselements derart dimensioniert oder abgestimmt, dass ein feinfühliges Verfahren bzw. Schwenken der Trageinheit möglich ist. Wie bereits angedeutet, kann die Rolleneinheit sowohl zum Umlenken des Zugelements dienen als auch dazu, das Zugelement auf- und/oder abzuwickeln. Besonders im letztgenannten Fall kann mit Vorteil das Verhältnis des Radius der Rolleneinheit zum Radius des Führungselements dazu genutzt werden, ein bestimmtes Übersetzungsverhältnis einzustellen, welches ein äußerst sensibles und feinfühliges Verschwenken der Nachführvorrichtung ermöglicht.

Zweckmäßigerweise ist die Rolleneinheit derart zum Führungselement angeordnet, dass ein Zugelement zwischen dem Führungselement und der Rolleneinheit im Wesentlichen horizontal verläuft. Zweckmäßigerweise kann die Rolleneinheit, insbesondere eine Rolleneinheit, welche zum Umlenken des Zugelements verwendet wird, auch dazu genutzt werden, das Zugelement nahe über dem Boden zu führen. Hinsichtlich des Rückführens des Zugelements sowie der Seilführung im Allgemeinen sei allerdings auf die nachfolgenden Ausführungen zur Querreihe, zur Längsreihe sowie zum Solarmodulfeld verwiesen.

Erfindungsgemäß umfasst eine Querreihe von Nachführvorrichtungen zumindest zwei erfindungsgemäße Nachführvorrichtungen, wobei die zumindest zwei Nachführvorrichtungen entlang einer Querachse, welche sich quer zu der Rotationsachse erstreckt, angeordnet sind, und wobei die zumindest zwei Nachführvorrichtungen derart über ein Zugelement verbunden sind, dass eine Rotation der einen Nachführvorrichtung auf die andere übertragbar ist. Dies bedeutet, dass entlang der Querachse angeordnete Nachführvorrichtungen sozusagen wechselseitig mit Zugelementen verbunden sind, wobei die Zugelemente derart an den Krafteinleitungsbereichen der nebeneinander angeordneten Nachführvorrichtungen angeordnet sind, dass ein Zugelement, welches z. B. mit einer gegen den Uhrzeigersinn schwenkenden Trageinheit bzw. mit dessen Krafteinleitungsbereich verbunden ist, derart mit dem Krafteinleitungsbereich einer anderen Nachführvorrichtung verbunden ist, dass diese Trageinheit durch das Zugelement im Uhrzeigersinn verschwenkt wird. Ein Zugelement wird also durch ein Verschwenken einer Trageinheit verschwenkt und kann damit eine andere Trageinheit ebenfalls verschwenken. Somit kann eine Rotation bzw. ein Verschwenken leicht von einer Nachführvorrichtung auf eine andere übertragen werden. Die andere Nachführvorrichtung muss dabei nicht direkt daneben angeordnet sein. Bevorzugt sind immer nebeneinander angeordnete Nachführvorrichtungen durch ein Zugelement verbunden. Ebenso können aber auch die übernächste und/oder die überübernächste Nachführvorrichtung etc. derart verbunden sein. In gleicher Weise kann auch eine Nachführvorrichtung mit mehreren Nachführvorrichtungen verbunden sein, indem sich beispielsweise das Zugelement entsprechend auf mehrere Nachführvorrichtungen aufteilt oder indem die eine Nachführvorrichtung gleich mit mehreren Zugelementen verbunden ist. Die Zugelemente, die die Rotationsbewegung von einer zur anderen Nachführvorrichtung übertragen, werden auch Übertragungselemente genannt. Es gibt aber auch immer zumindest ein Zugelement oder, allgemeiner gesagt, zumindest eine Antriebskraft, welche zumindest eine Nachführvorrichtung in der Querreihe verschwenken kann, welche also die Schwenkbewegungen (in beiden Richtungen) in die Querreihe einleitet. Ein Zugelement, welches diese Kraft einleitet, wird vorliegend Antriebselement genannt. Ein derartiges Antriebselement kann beispielsweise mit der vorgenannten Rolleneinheit verbunden sein bzw. auf dieser auf- oder abgewickelt werden.

Bei der Rolleneinheit kann es sich um ein durchgehendes Torsionsrohr handeln, welches ausgelegt ist, mehrere Querreihen anzutreiben und welche sich dementsprechend entlang der Querreihe erstreckt. Es kann aber auch jede Querreihe für sich eine derartige Rolleneinheit aufweisen. Eine derartige Rolleneinheit, welche mit einem Antriebselement arbeitet, ist ausgelegt, eine Zugkraft aufzubauen und ermöglicht damit eine Rotation in eine Richtung. Mit Vorteil weist daher eine Querreihe zwei derartige Rolleneinheiten an ihren beiden Enden auf, wodurch ein Verschwenken im und gegen den Uhrzeigersinn ermöglicht wird. In einer bevorzugten Ausführungsform werden die beiden Rolleneinheiten über eine entsprechend ausgelegte Steuerung auf Gleichlauf gehalten. Die Zugelemente werden zweckmäßigerweise gegen die zuvor genanten Spanneinheiten auf Spannung gehalten. Über Druckmessdosen in den Zugelementen kann grundsätzlich die (Seil-) Spannung kontrolliert und geregelt werden. Es kann aber auch mit einem Antriebselement gearbeitet werden, welches dann an einem Ende der Querreihe lediglich umgelenkt wird.

Zweckmäßigerweise ist zumindest eine Nachführvorrichtung mit einer Antriebseinheit verbunden. Bei der Antriebseinheit kann es sich um eine Seilwinde, um einen Spindelmotor oder um einen Hydraulikzylinder handeln. Zweckmäßigerweise kann auch ein Führungselement selbst, da es ja die kreissegmentförmige Form aufweist, zur Krafteinleitung verwendet werden, wenn es beispielsweise mit einem entsprechenden Profil, beispielsweise einem Zahnprofil, versehen ist. In diesem Fall kann ein derartiges Führungselement über ein entsprechend ausgestaltetes Zahnrad, welches mit z. B. einem Elektromotor verbunden ist, angetrieben werden. Das zuvor genannte Torsionsrohr ist ausgelegt, eine Drehbewegung der Antriebseinheit auf mehrere Querreihen zu übertragen.

Erfindungsgemäß umfasst eine Längsreihe von Nachführvorrichtungen zumindest zwei erfindungsgemäße Nachführvorrichtungen, wobei die zumindest zwei Nachführvorrichtungen entlang einer Längsachse, welche sich entlang der Rotationsachse erstreckt, angeordnet sind, und wobei ein Rotation der einen Nachführvorrichtung auf die andere über die Trageinheit und/oder über eine Antriebswelle übertragbar ist. Das zuvor bereits genannte Torsionsrohr kann als Antriebswelle interpretiert werden, welche ausgelegt ist, eine Rotation der einen Nachführvorrichtung auf die andere entlang der Längsrichtung zu übertragen. Ebenso kann die Übertragung auch über die Trageinheiten bzw. die Solarmodule oder die Solarmodultische selbst erfolgen. Eine Trageinheit, welche im Wesentlichen aus einem Querträger und wenigstens zwei Längsträgern gebildet wird, kann auch derart ausgebildet sein, dass sie sich über mehrere Nachführvorrichtungen erstreckt. Die Längsträger einer Nachführvorrichtung können dabei so lang ausgeführt sein, dass sie noch auf einem Pfosten einer Nachführvorrichtung angeordnet bzw. befestigt werden können, welche entlang der Rotationsachse neben der vorgenannten Nachführvorrichtung angeordnet sind. Ebenfalls kann sich ein Längsträger auch über mehr als zwei Nachführvorrichtungen erstrecken, beispielsweise drei, vier, fünf oder mehr. Aus Praktikabilitätsgründen ist es aber auch bevorzugt, die Längsträger entsprechend zu stückeln. Mit anderen Worten weist also nicht jede Nachführvorrichtung für sich eine Trageinheit auf, sondern mehrere Nachführvorrichtungen bilden oder formen eine große Trageinheit, welche sich entlang der Längsrichtung erstreckt. Diese ist dabei zweckmäßigerweise derart stabil ausgeführt, dass eine Rotations- bzw. Schwenkbewegung einer Trageinheit auf die andere entlang der Längsrichtung übertragbar ist.

Erfindungsgemäß umfasst ein Solarmodul-Feld zumindest eine erfindungsgemäße Querreihe von Nachführvorrichtungen und zumindest eine erfindungsgemäße Längsreihe von Nachführvorrichtungen sowie eine Antriebseinheit. Mögliche Antriebseinheiten wurden vorab bereits genannt. In einer bevorzugten Ausführungsform umfasst ein derartiges Solarmodul-Feld auch Querreihen, welche keine Nachführvorrichtungen mit Führungselementen aufweisen. Diese Querreihen werden also letztlich nur passiv verschwenkt. In diesem Zusammenhang sei erwähnt, dass die Längsreihe nicht ausschließlich aus Nachführvorrichtungen gebildet sein muss, welche das Führungselement aufweisen. Letztendlich reichen Nachführvorrichtungen, welche eine um ein Drehgelenk bewegliche Trageinheit aufweisen.

Weitere Vorteile und Merkmale ergeben sich aus der nachfolgenden Beschreibung bevorzugter Ausführungsformen der erfindungsgemäßen Nachführvorrichtung für Solarmodule, der erfindungsgemäßen Querreihe von Nachführvorrichtungen, der erfindungsgemäßen Längsreihe von Nachführvorrichtungen sowie des erfindungsgemäßen Solarmodulfelds mit Bezug auf die beigefügten Figuren. Einzelne Merkmale der einzelnen Ausführungsformen können dabei im Rahmen der Erfindung miteinander kombiniert werden.

Es zeigen:
- Fig. 1a:: eine perspektivische Ansicht einer bevorzugten Ausführungsform einer Nachführvorrichtung für Solarmodule;
- Fig. 1b:: eine Prinzipdarstellung einer Ausführungsform einer erfindungsgemäßen Nachführvorrichtung für Solarmodule zur Veranschaulichung der Kinematik beim Verschwenken;
- Fig. 1c:: eine Prinzipdarstellung einer aus dem Stand der Technik bekannten Nachführvorrichtung für Solarmodule zur Veranschaulichung der Kinematik beim Verschwenken;
- Fig. 2:: eine Seitenansicht einer Ausführungsform einer Nachführvorrichtung für Solarmodule mit einer Rolleneinheit;
- Fig. 3:: eine Seitenansicht einer Ausführungsform einer Nachführvorrichtung für Solarmodule zur Veranschaulichung der Führung der Zugelemente;
- Fig. 4:: eine Ausführungsform einer Querreihe von Nachführvorrichtungen in unwegsamem Gelände;
- Fig. 5a:: eine Ausführungsform einer Querreihe von Nachführvorrichtungen für Solarmodule;
- Fig. 5b:: eine weitere Ausführungsform einer Querreihe von Nachführvorrichtungen für Solarmodule;
- Fig. 5c:: eine weitere Ausführungsform einer Querreihe von Nachführvorrichtungen für Solarmodule;
- Fig. 5d:: eine weitere Ausführungsform einer Querreihe von Nachführvorrichtungen für Solarmodule;
- Fig. 6:: eine Ausführungsform eines Solarmodul-Felds in einer Draufsicht.

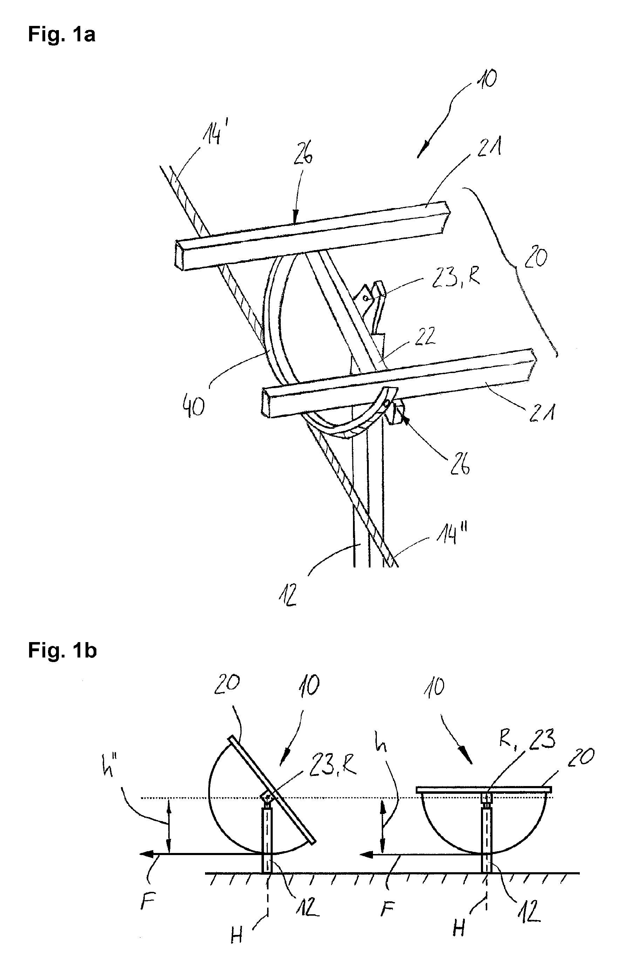

**Fig. 1a** zeigt eine bevorzugte Ausführungsform einer Nachführvorrichtung 10 in einer perspektivischen Ansicht. Die Nachführvorrichtung 10 umfasst einen Posten 12, an welchem mittelbar über ein Drehgelenk 23 ein Querträger 22 befestigt ist. Der Pfosten 12 ist z. B. in einem Untergrund wie dem Erdboden verankert oder fundamentiert und steht im Wesentlichen senkrecht. Das Drehgelenk 23 befindet sich nicht direkt am Pfosten 12, sondern an einem oben am Pfosten angeordneten und hier nicht näher bezeichneten Kopfstück. Am Querträger 22 sind an beiden Enden Längsträger 21 befestigt. Der Querträger 22 sowie die beiden Längsträger 21 bilden eine Trageinheit 20. Die beiden Längsträger 21 können derart ausgeführt sein, dass sie sich über mehrere Nachführvorrichtungen erstrecken. Damit kann auch eine Trageinheit 20 realisiert werden, welche sich über mehrere Nachführvorrichtungen und damit Pfosten erstreckt. Die Trageinheit 20 umfasst zwei Krafteinleitungsbereiche 26, an welchen ein im Wesentlichen kreissegmentförmiges bzw. halbkreisförmiges Führungselement 40 befestigt ist. Das Führungselement 40 wiederum dient zur Führung von zwei Zugelementen, welche mit dem Bezugszeichen 14' und 14" gekennzeichnet sind. Die beiden Zugelemente 14' und 14" werden über das Führungselement gewissermaßen an die Krafteinleitungsbereiche 26 geführt und sind dort befestigt. Sowohl die beiden Längsträger 21 als auch der Querträger 22 sind aus geschlossenen Vierkantprofilen gebildet. Das Führungselement 40 wird durch ein halbkreisförmig gebogenes U-Profil gebildet.

**Fig. 1b** zeigt eine Prinzipdarstellung einer Nachführvorrichtung 10 in zwei Zuständen. In der linken Bildhälfte ist eine Trageinheit 20 der Nachführvorrichtung 10 verschwenkt dargestellt. Dargestellt ist weiter ein Hebel h", welcher sich zwischen einem Drehpunkt 23 und einer Kraftrichtung F befindet. Die Kraft wirkt im Wesentlichen senkrecht zu einer Hochachse H des Pfostens 12 bzw. senkrecht zum Hebel h". Gegenüber der rechten Bildhälfte, in welcher die Trageinheit 20 im Wesentlichen parallel zu einem Boden ausgerichtet, mit anderen Worten also nicht verschwenkt, ist, ist deutlich zu sehen, dass ein Hebel h genauso groß ist wie in der linken Bildhälfte, da er der Kreisbahn des Kreissegments folgt, in deren Mittelpunkt sich der Drehpunkt befindet..

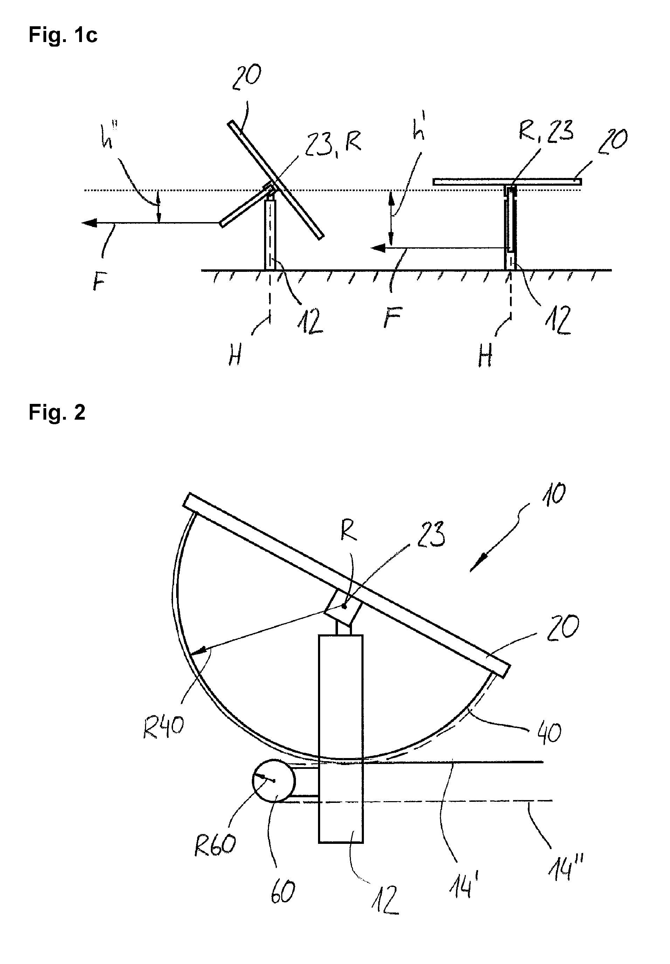

**Fig. 1c** zeigt eine Prinzipdarstellung einer Nachführvorrichtung, wie sie aus dem Stand der Technik bekannt ist. In einer linken Bildhälfte ist eine Trageinheit 20, welche um einen Drehpunkt 23 bzw. um eine Rotationsachse R verschwenkt ist dargestellt. Zwischen dem Drehpunkt 23 und einer Kraftrichtung F, welche die Schwenkbewegung einleitet bzw. hält, erstreckt sich ein Hebel h", der sich im Wesentlichen senkrecht zur Kraftrichtung F erstreckt. In einer rechten Bildhälfte ist die Trageinheit 20 im Wesentlichen parallel zum Boden, mit anderen Worten also nicht verschwenkt dargestellt. Ein Hebel h', welcher sich zwischen dem Drehpunkt 23 und der Kraftrichtung F bemisst, ist hier deutlich größer als im verschwenkten Zustand. Um dasselbe Moment zu erzielen, muss allerdings bei einer Verkleinerung des Hebels die Kraft erhöht werden, so dass eine derartige Verkleinerung des Hebels, wie sie in Fig. 1 skizzenhaft dargestellt ist, äußerst problematisch ist.

**Fig. 2** zeigt eine Seitenansicht einer Ausführungsform einer Nachführvorrichtung 10 mit einer Rolleneinheit 60. Die Rolleneinheit 60 ist ausgelegt, ein Zugelement 14", welches an der Trageinheit 20 befestigt ist, umzuleiten. Ebenso könnte das Zugelement 14" allerdings auch auf der Rolleneinheit 60 auf- oder abgewickelt werden. Dies wäre insbesondere dann der Fall, wenn die Rolleneinheit 60 auch als Antriebselement wirkt und dazu dient, die Trageinheit 20 beispielsweise im Uhrzeigersinn zu verschwenken. Hierzu können mit Vorteil ein Radius R60 der Rolleneinheit 60 und ein Radius R40 eines Führungselements 40 aufeinander abgestimmt werden. Wie bereits bekannt, ist die Trageinheit 20 über einen Drehpunkt 23 an einem Pfosten 12 befestigt, so dass um eine Rotationsachse R eine Dreh- bzw. Schwenkbewegung möglich ist. Über das Führungselement 40 wird ein weiteres Zugelement 14' geführt, welches ebenfalls an der Trageinheit 20 befestigt ist.

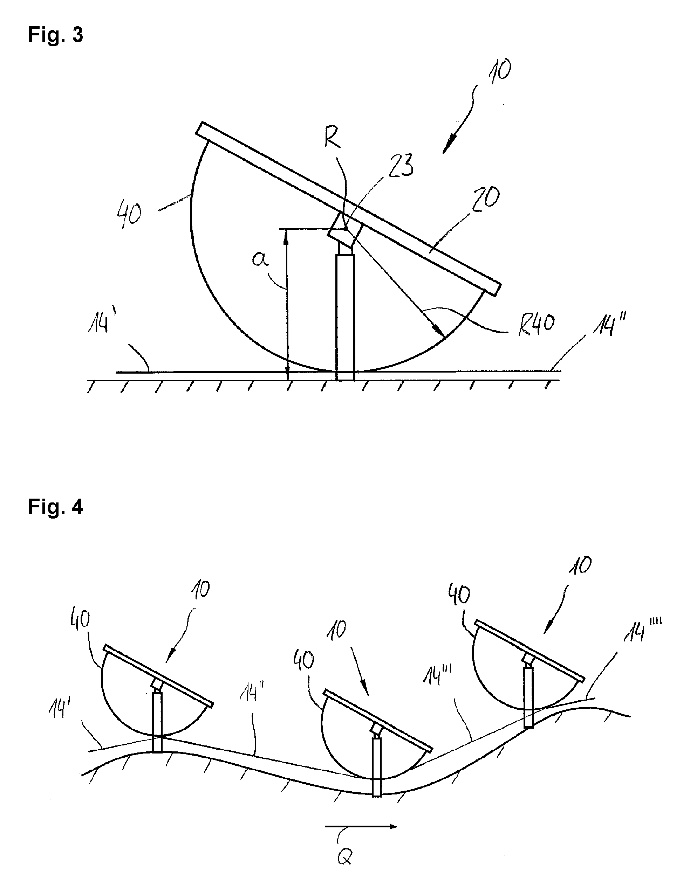

Fig. 3 zeigt im Wesentlichen die in Fig. 2 dargestellte Nachführvorrichtung 10. Besonderes Augenmerk ist hierbei auf einen Abstand a eines Drehgelenks 23 zum Boden gerichtet. Ein Radius R40 eines Führungselements 40 ist mit Vorteil derart zu dem Abstand a ausgebildet, dass die Zugelemente, in diesem Fall die Zugelemente 14' und 14", möglichst nahe über dem Boden geführt werden. Dies ermöglicht ein Überfahren der Zugelemente beispielsweise mit einem Fahrzeug.

**Fig. 4** zeigt eine Querreihe von Nachführvorrichtungen 10, welche sich entlang einer Querachse Q erstreckt. Deutlich zu sehen ist, dass es sich bei der Querachse Q nicht um eine Gerade im strengen Sinn handeln muss, sondern dass sich die Querachse Q auch entlang eines hügeligen Geländes erstrecken kann. Mit Vorteil werden die Zugelemente, in diesem Fall die Zugelemente 14', 14", 14'" und 14"" durch Führungselemente 40 der Nachführvorrichtungen 10 derart geführt, dass sich deren Position und Lage ideal den Bodengegebenheiten anpasst.

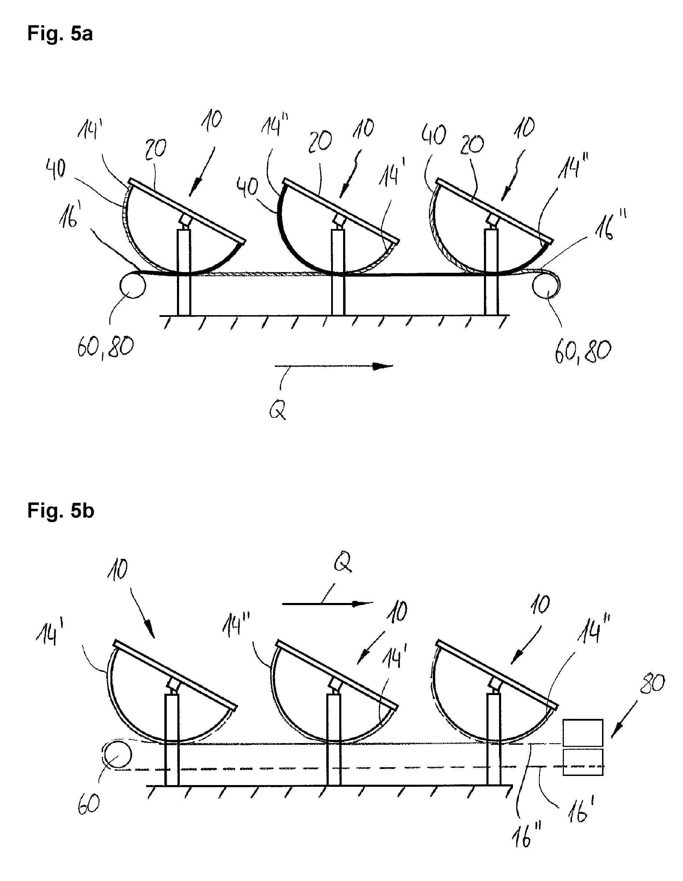

**Fig. 5a** zeigt eine Ausführungsform einer Querreihe von Nachführvorrichtungen 10, welche sich entlang einer Querachse Q erstreckt, in einer Seitenansicht. Die Querreihe umfasst zwei Rolleneinheiten 60, welche als Antriebseinheiten 80 ausgebildet sind. Von den Antriebseinheiten 80 führen Antriebselemente 16" zu Trageinheiten 20 der daneben angeordneten Nachführvorrichtungen 10. Die beiden Antriebselemente 16' und 16" werden über die entsprechenden Führungselemente 40 an die hier nicht näher bezeichneten und gekennzeichneten Krafteinleitungsbereiche geführt. Bei den Antriebselementen 16' und 16" kann es sich allgemein z. B. um Drahtseile handeln. Die beiden äußeren Nachführvorrichtungen bzw. dessen Trageinheiten 20 sind mit je einem Zugelement 14' bzw. einem Zugelement 14" mit der mittleren Trageinheit 20 verbunden. Diese Anordnung der Zugelemente ermöglicht es, dass eine Rotation von einer Nachführvorrichtung 10 auf die andere Nachführvorrichtung 10 übertragbar ist. Die Einleitung der Bewegung in die Querreihe erfolgt über die beiden Antriebseinheiten 80, wobei die linke Antriebseinheit 80 eine Rotation im Uhrzeigersinn einleitet, während die rechte Antriebseinheit 80 eine Rotation gegen den Uhrzeigersinn einleitet. Antriebseinheiten 80 und Rolleneinheiten 60 sind hier als jeweils eine Komponente/Bauteil ausgeführt.

**Fig. 5b** zeigt die im Wesentlichen in Fig. 5a dargestellte Konfiguration einer Querreihe von Nachführvorrichtungen 10. Eine Rolleneinheit 60 dient hier dazu, ein Antriebselement 16' bzw. ein Drahtseil 16' umzulenken und zu einer Antriebseinheit 80 zu führen. Von der Antriebseinheit 80 aus geht ein zweites Antriebselement 16" bzw. ein Drahtseil 16" zu einer in Fig. 5b rechts angeordneten Nachführvorrichtung 10. Tatsächlich könnte die Antriebseinheit 80 aber auch derart ausgebildet sein, dass sie beispielsweise das Antriebselement 16' ebenfalls umleitet und zu der rechten Nachführvorrichtung 10 führt, so dass diese Konfiguration mit nur einem Antriebselement auskommen könnte. Der Verlauf der übrigen Zugelemente 14', 14" entspricht der in Fig. 5a dargestellten Konfiguration.

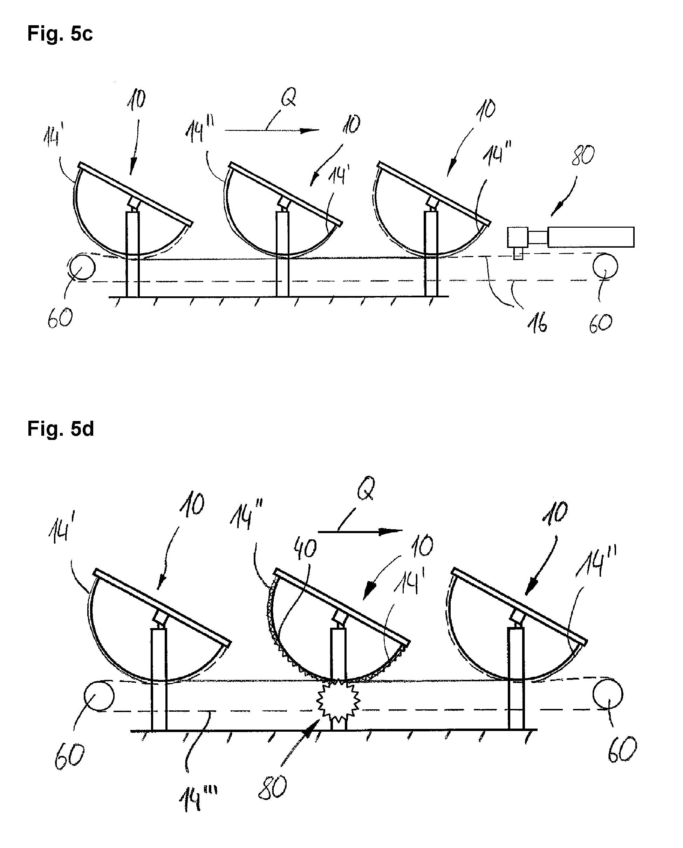

**Fig. 5c** zeigt eine Konfiguration einer Querreihe von Nachführvorrichtung 10, welche mit nur einem Antriebselement 16 und zwei Rolleneinheiten 60 arbeitet. Zum Bewegen bzw. Verlagern des Antriebselements 16 ist eine Antriebseinheit 80 vorgesehen, welche als Spindelmotor oder Hydraulikzylinder ausgebildet ist.

**Fig. 5d** zeigt eine Ausführungsform einer Querreihe von Nachführvorrichtungen 10, wobei eine Antriebseinheit 80 als Zahnrad ausgebildet ist bzw. ein Zahnrad umfasst, welches in eine entsprechende Geometrie, welche an einem Führungselement 40 der Nachführvorrichtung 10 angeordnet ist, eingreifen kann. Die Übertragung dieser Bewegung erfolgt über als Übertragungselemente wirkende Zugelemente 14', 14" und 14"'. Das Übertragungselement 14'" wird über zwei Rolleneinheiten 60 entsprechend umgelenkt.

Selbstverständlich sind die in den Fig. 5a bis 5d gezeigten Querreihen für Nachführvorrichtungen nicht auf die Anordnung/Verwendung von lediglich drei Nachführvorrichtungen begrenzt. Zweckmäßigerweise sind in einer Querreihe, welche sich entlang einer Querachse Q erstreckt, mehr als drei Nachführvorrichtungen 10 angeordnet.

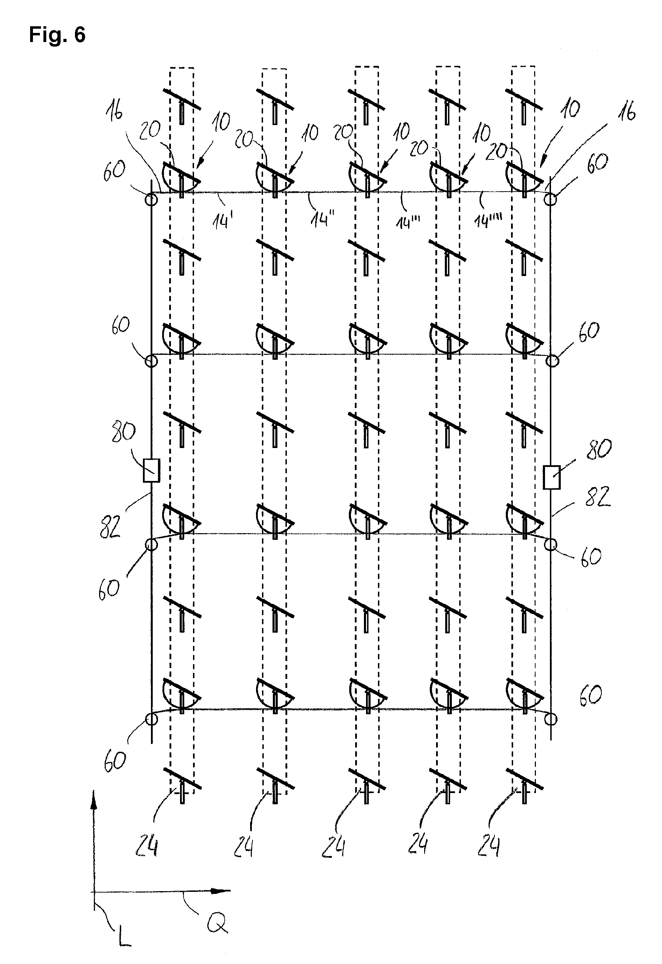

**Fig. 6** zeigt ein Solarmodul-Feld in einer Draufsicht, welches eine Vielzahl von Querreihen umfasst, welche sich entlang einer Querachse Q erstrecken, sowie eine Vielzahl von Längsreihen, welche sich entlang einer Längsachse L erstrecken. Gestrichelt ist angedeutet, dass sich entlang der Längsachse L Solarmodule bzw. Solarmodultische 24 erstrecken, welche über die entsprechenden Nachführvorrichtungen 10 bzw. deren Trageinheiten abgestützt werden. Deutlich zu sehen ist, dass es auch Querreihen von Nachführvorrichtungen gibt, welche nicht mit einem Führungselement 40 versehen sind. Ein Verschwenken dieser Querreihen erfolgt über die entsprechend ausgebildeten Trageinheiten 20 bzw. über die Solarmodultische 24. Es ist also nicht nötig, ein ganzes Solarmodul-Feld mit Nachführvorrichtungen zu bestücken, welche das kreissegmentförmige Führungselement aufweisen. Bei dem hier dargestellten Solarmodul-Feld sind Rolleneinheiten 60 an den Enden der entsprechenden Querreihen mit Antriebswellen 82 verbunden. In die Antriebswellen 82 wird eine Drehbewegung über Antriebseinheiten 80 eingeleitet, welche dann letztendlich über die Rolleneinheiten 60 auf die entsprechenden Antriebselemente 16 und die entsprechenden Zugelemente, beispielsweise 14', 14", 14'" und 14"", übertragbar ist.

### Bezugszeichenliste

- 10: Nachführvorrichtung
- 12: Pfosten
- 14: Zugelement, Übertragungselement
- 16: Zugelement, Antriebselement
- 20: Trageinheit
- 21: Längsträger
- 22: Querträger
- 23: Drehgelenk
- 24: Solarmodul/Solarmodultisch
- 26: Krafteinleitungsbereich
- 40: Führungselement
- R40: Radius Führungselement
- 60: Rolleneinheit
- R60: Radius Rolleneinheit
- 80: Antriebseinheit
- 82: Antriebswelle
- a: Abstand des Drehgelenks vom Untergrund
- Q: Querachse
- L: Längsachse
- R: Rotationsachse
- H: Hochachse
- h, h', h": Hebel

## Patentansprüche

1. Nachführvorrichtung (10) für Solarmodule,
umfassend einen Pfosten (12) zur mittelbaren und/oder unmittelbaren Anordnung einer Trageinheit (20), welche über ein Drehgelenk (23) um eine Rotationsachse (R) rotierbar ist,
wobei die Trageinheit (20) zwei bezogen auf das Drehgelenk (23) gegenüberliegende Krafteinleitungsbereiche (26) zum Rotieren der Trageinheit (20) umfasst,
wobei eine Krafteinleitung mittels eines zumindest im Wesentlichen kreissegmentförmigen Führungselements (40) erfolgt, und
wobei ein Radius (R40) des kreissegmentförmigen Führungselements (40) einem Abstand des jeweiligen Krafteinleitungsbereichs (26) zum Drehgelenk (23) entspricht.

2. Nachführvorrichtung (10) nach Anspruch 1,
wobei das Führungselement (40) an der Trageinheit (20) befestigt ist, und wobei im oder am Krafteinleitungsbereich (26) ein Zugelement (14, 16) befestigt ist.

3. Nachführvorrichtung (10) nach Anspruch 1 oder 2,
wobei das kreissegmentförmige Führungselement (40) im Wesentlichen halbkreisförmig ist.

4. Nachführvorrichtung (10) nach einem der vorhergehenden Ansprüche, wobei das Führungselement (40) ausgelegt ist, ein oder mehrere Zugelemente (14,16) in einer zumindest im Wesentlichen senkrecht zu der Rotationsachse (R) stehenden Ebene zu führen.

5. Nachführvorrichtung (10) nach einem der vorhergehenden Ansprüche, wobei das Führungselement (40) aus einem Profil, insbesondere einem Metallprofil, gebogen ist,
wobei das Profil bevorzugt ein U-Profil ist.

6. Nachführvorrichtung (10) nach einem der vorhergehenden Ansprüche, wobei das Drehgelenk (23) in einem Abstand (a) zu einem Untergrund angeordnet ist, und
wobei ein Verhältnis des Radius (R40) des Führungselements (40) zu dem Abstand (a) in einem Bereich von etwa 0,8 bis 0,98 liegt.

7. Nachführvorrichtung (10) nach einem der vorhergehenden Ansprüche, umfassend eine Rolleneinheit (60), welche ausgelegt ist, ein Zugelement (14, 16) auf- und abzuwickeln und/oder umzulenken.

8. Nachführvorrichtung (10) nach Anspruch 7,
wobei die Rolleneinheit (60) derart zum Führungselement (40) angeordnet ist, dass ein Zugelement (14, 16) zwischen dem Führungselement (40) und der Rolleneinheit (60) im Wesentlichen horizontal verläuft.

9. Querreihe von Nachführvorrichtungen,
umfassend zumindest zwei Nachführvorrichtungen (10) nach einem der vorhergehenden Ansprüche,
wobei die zumindest zwei Nachführvorrichtungen (10) entlang einer Querachse (Q), welche sich quer zu der Rotationsachse (R) erstreckt, angeordnet sind, und
wobei die zumindest zwei Nachführvorrichtungen (10) derart über ein Zugelement (14) verbunden sind, dass eine Rotation der einen Nachführvorrichtung (10) auf die andere übertragbar ist.

10. Querreihe nach Anspruch 9,
wobei zumindest eine Nachführvorrichtung (10) mit einer Antriebseinheit (80) verbunden ist.

11. Längsreihe von Nachführvorrichtungen,
umfassend zumindest zwei Nachführvorrichtungen nach einem der Ansprüche 1-8,
wobei die zumindest zwei Nachführvorrichtungen entlang einer Längsachse (L), welche sich entlang der Rotationsachse (R) erstreckt, angeordnet sind, und
wobei ein Rotation der einen Nachführvorrichtung (10) auf die andere über die Trageinheit (20) und/oder über eine Antriebswelle (82) übertragbar ist.

12. Solarmodul-Feld,
umfassend zumindest eine Querreihe von Nachführvorrichtungen gemäß Anspruch 9 oder 10 und zumindest eine Längsreihe von Nachführvorrichtungen gemäß Anspruch 11 sowie eine Antriebseinheit (80).
